# FASCICULE DE BREVET EUROPEEN

(11) **EP 0 377 724 B1**
(45) Date de publication et mention de la délivrance du brevet: **02.03.1994**
(21) Numéro de dépôt: 89907772.1
(22) Date de dépôt: 20.06.1989
(51) Int. Cl.: G03H 1/00

(54) **HOLOGRAMME A GRAND CHAMP DE VISION**
WEITWINKELHOLOGRAMM
WIDE VISUAL FIELD HOLOGRAM

(30) Priorité: 20.06.1988 FR 8808211
(43) Date de publication de la demande: 18.07.1990
(73) Titulaire: GARCON, Thierry, F-95600 Eaubonne (FR)
(72) Inventeur: GARCON, Thierry, F-95600 Eaubonne (FR)
(74) Mandataire: Kremer, Robert A.M.
(86) Numéro de dépôt international: FR8900315
(87) Numéro de publication internationale: WO8912851

(56) Documents cités:
- EP-A- 0 107 362
- Journal Optical Soc. Am., vol. 56, no. 4, avril 1966, E.P. Suprtzi et al.: "Wide-angle holography", pp 524, 525.
- Applied Physics Letters, vol. 8, no. 6, 15 mars 1966, F.B. Rotz et al.: "Holograms with nonpseudoscopic real images", pp 146-148.
- Proceedings Intern. Soc. for Optical Engineering, SPIE vol. 761, 1987, SPIE (Washington, US), S.A. Benton: ""Alcove" holograms for computer-aided design", pp 53-61.

## Description

L'invention concerne l'holographie et permet d'obtenir des représentations particulièrement attractives, d'une part grâce à l'exceptionnelle qualité de l'impression de relief procurée et, d'autre part, grâce à un champ de vision particulièrement étendu.

On sait qu'un hologramme est un enregistrement, sur une matière d'enregistrement holographique, des rayons lumineux réfléchis par un objet éclairé par une lumière cohérente.

Ensuite, en observant la matière d'enregistrement holographique, éclairée comme elle l'était lors de l'enregistrement, l'observateur voit en relief, lors de la restitution, la représentation de l'objet à l'endroit où celui-ci était, par rapport à la matière d'enregistrement holographique, lors de l'enregistrement.

Selon que le rayon lumineux réfléchi par l'objet et celui éclairant directement la matière d'enregistrement holographique parviennent à celle-ci par une même face ou par deux faces opposées, on se trouve en présence d'un hologramme de transmission ou d'un hologramme de réflexion.

Lors de la restitution, l'image observée est dite "réelle" quand l'observateur la perçoit devant (ou en deçà) de la matière d'enregistrement holographique et "virtuelle" quand l'observateur la perçoit derrière (ou au-delà) de la matière d'enregistrement holographique.

L'espace dans lequel apparaissent les images réelles est accessible aux observateurs qui ont la possibilité de mettre la main là où se trouve l'image, ce qui est une sensation quasi surnaturelle. Au contraire, l'espace dans lequel apparaissent les images virtuelles est inaccessible puisqu'il est situé derrière la matière d'enregistrement holographiqueque la main ne peut évidemment pas traverser.

Bien entendu, il existe aussi des images qui présentent une partie réelle et une partie virtuelle, ce qui est très favorable à l'effet de profondeur de champ, l'image de l'objet représenté étant ainsi particulièrement spectaculaire quand l'objet a lui-même une forme allongée : coque de bateau vue de l' étrave par exemple.

Par ailleurs, on appelle "images orthoscopiques" les images réelles ou virtuelles qui restituent un relief normal et "images pseudoscopiques"_{,} les images réelles ou virtuelles qui restituent un relief inversé : les parties convexes lors de l'enregistrement sont restituées concaves et vice versa. Une image pseudoscopique d'une statuette, par exemple, donnerait à l'observateur, lors de la restitution, l'impression qu'il regarde un moule ouvert. Cela engendre une illusion d'optique gênante car contraire à la nature.

Pour obtenir un hologramme, deux opérations sont nécessaires et, pour la bonne compréhension de l'invention, il faut les distinguer nettement, même si elles sont inséparables puisque toutes deux indispensables et concourant à l'effet final : le première est l'enregistrement sur la matière d'enregistrement holographique, la seconde est la restitution pour la présentation à un observateur de la matière d'enregistrement holographique convenablement éclairée.

La qualité de la restitution dépend évidemment de la qualité de l'enregistrement mais une condition essentielle pour donner à un observateur une sensation impressionnante de réalité est l'étendue du champ de vision, c'est-à-dire la valeur de l'angle à l'intérieur duquel un ou plusieurs observateurs doivent se trouver pour percevoir en relief toutes les parties de l'image restituée. Or, le champ de vision intéresse la restitution et non l'enregistrement.

Néanmoins, la nature même des hologrammes fait que l'enregistrement et la restitution sont très intimement dépendants l'un de l'autre.

Ainsi, par exemple, s'il est possible en photographie classique de faire une prise de vue en 24 X 36 millimètres et d'obtenir des tirages selon des formats tout à fait différents (jusqu'à 4 X 3 mètres pour les affiches), cela est irréalisable en holographie car on ne peut restituer que ce que l'on a enregistré à la même échelle.

C'est pourquoi la recherche de la qualité a conduit à prendre en compte à la fois les opérations d'enregistrement et les opérations de restitution.

Ainsi, dans le document JOURNAL OPTICAL SOC. AM., volume 56, No 4, Avril 1966, E.P. SUPERTZI et al. : "Wide-angle holography", pages 524-525, est décrit un procédé qui permet d'augmenter le champ de vision lors de la restitution d'images holographiques, en utilisant, lors de l'enregistrement, une matière d' enregistrement holographique courbe.

Mais ce procédé ne permet d'obtenir que des images virtuelles dont on a indiqué plus haut les inconvénients qui les disqualifient lorsque l'on recherche l'obtention d'hologrammes de haute qualité.

Dans le brevet EP-A-0 107 362, est décrit un procédé qui utilise un miroir cylindrique pour obtenir une image réelle située dans un espace défini par une matière d'enregistrement holographiquecourbe, mais cette image est pseudoscopique et, par conséquent, cette solution doit être écartée aussi.

Ce procédé présente, en outre, l'inconvénient de procurer uniquement des images réelles, sans aucune partie virtuelle et, donc, dénuées de toute profondeur de champ.

Dans le document "APPLIED PHYSICS LETTERS", vol. 8, No 6, du 15 Mars 1966, F.B. ROTZ et al. : "Holograms with nonpseudoscopic real images", pages 146 à 148, est décrit un procédé de réalisation d'un hologramme plan à image orthoscopique, au moins partiellement réelle du sujet, celui-ci étant d'abord enregistré sur un premier "hologramme à transférer" (ou "transféré"), ou "hologramme primaire", qui est ensuite reproduit holographiquement sur un second hologramme appelé "hologramme de transfert" ou "hologramme secondaire".

Un inconvénient de ce procédé est qu'il n'est pas possible d'avoir un champ de vision étendu, 180 degrés par exemple, sur une image réelle orthoscopique car la matière d'enregistrement holographique de l'hologramme final est plane. De plus, pour augmenter le champ de vision d'une image réelle orthoscopique qui est limité par les bords de la matière d'enregistrement holographique plane, il faut lors de l'enregistrement, soit augmenter le format de la matière d'enregistrement holographique, soit diminuer la distance entre l'image restituée et la matière d'enregistrement holographique, ce qui revient à diminuer l'avancée de l'image.

L'invention propose une solution nouvelle, tout-à-fait différente de ce qu'enseignent les éléments de la technique connue car cette solution permet d'obtenir des hologrammes restituant des images soit totalement réelles, soit en partie réelles et en partie virtuelles, toujours orthoscopiques, et avec un champ de vision étendu.

Avec un champ de vision étendu, les angles morts à partir desquels on ne peut plus voir les images restituées, peuvent être diminués ou, même, totalement éliminés.

Cela donne plusieurs possibilités simultanées :
- un seul observateur peut percevoir les images restituées pendant un temps relativement long s'il se déplace par rapport à elles. On peut donc, désormais, placer des hologrammes à images réelles orthoscopiques dans des lieux de passage en étant assuré qu'elles seront perçues.
- un seul observateur peut percevoir les images restituées à partir d'une position parmi beaucoup d'autres et effecteur une véritable exploration de l'objet représenté, sur une portion importante de son périmètre.
- plusieurs personnes peuvent, en même temps, observer les images restituées. Plus de champ de vision est grand et plus le nombre de personnes peut lui-même être grand.

A cette fin, l'invention a pour objet un procédé d'obtention d'une image holographique au moins eu partie réelle et orthoscopique d'un objet, comportant une étape a) de réalisation d'un hologramme dans laquelle :
a1) - un enregistre holographiquement l'image d'un objet sur une première matière d'enregistrement holographique conformée selon une première surface,
a2) - on effectue un développement photographique de cette première matière d'enregistrement holographique,
a3) - on dispose en regard de la première matière d'enregistrement holographique développée et conformée selon ladite première surface, une deuxième matière d'enregistrement holographique conformée selon une deuxième surface non parallèle à la première surface et présentant au moins une partie concave tournant sa concavité vers la première matière d'enregistrement holographique,
a4) - on restitue l'image réelle pseudoscopique de l'objet enregistrée sur la première matière d'enregistrement holographique, au moins une partie de cette image restituée étant située dans l'espace limité par les deux matières d'enregistrement holographique, et un enregistre cette image restituée sur la deuxième matière d'enregistrement holographique conformée selon ladite deuxième surface, et
a5) - on effectue un développement photographique de la deuxième matière d'enregistrement holographique, et une étape b) de restitution de l'image holographique au moins eu partie réelle et orthoscopique à partir de l'hologramme réalisé, dans laquelle on restitue l'image holographique de l'objet à partir de la deuxième matière d'enregistrement holographique conformée selon la deuxième surface.

Selon d'autres caractéristiques de ce procédé, la première surface de la première matière d'enregistrement holographique peut être plane, ou présenter une concavité ou une convexité dirigée vers la deuxième matière d'enregistrement holographique dans les sous-étapes a3) et a4).
Par ailleurs, dans l'étape de réalisation de l'hologramme, la seconde matière d'enregistrement holographique présente avantageusement au moins un bord libre situé au voisinage d'un bord libre de la première matière d'enregistrement holographique.
La seconde matière d'enregistrement holographique, plane à l'état naturel, peut être conformée pour présenter au moins une partie courbe ou une forme entièrement concave et courbe.

L'invention sera mieux comprise par la description détaillée ci-après faite en référence au dessin annexé. Bien entendu, la description et le dessin ne sont donnés qu'à titre d'exemple indicatif et non limitatif.

Les figures 1, 2 et 3 sont des vues schémati-ques en perspective montrant des dispositions connnues de l'état de la technique selon trois variantes principales.

Les figures 4, 5 et 6 sont, en regard des figures précédentes, une illustration schématique des champs de vision que procurent ces dispositions connues lors de la restitution d'un hologramme.

Les figures 7 et 8 sont des schémas montrant deux variantes possibles en combinant les dispositions des figures 2-5 et 3-6.

La figure 9 est une vue schématique montrant les dispositions de la présente invention lors de l'opération de transfert.

La figure 10 est, enregard de la figure 9, une illustration schématique du champ de vision que procure l'invention lors de la restitution d'un hologramme.

La figure 11 est un tableau groupant les schémas de différentes variantes possibles et faisant ressortir, sur la ligne 3, les variantes essentielles de l'invention.

La figure 12 est un schéma général illustrant le procédé conforme à l'invention.

Les figures 13 à 16 sont des schémas possibles pour l'enregistrement, le transfert et la restitution d'hologrammes, conformément à la présente invention.

La figure 17 est une vue schématique en perspective d'un mode de réalisation particulier de l'invention lors de la restitution d'un hologramme.

Les figures 18 et 19 sont des vues schématiques montrant la présence d'angles morts permettant, lors de la restitution, de créer des effets spéciaux.

La figure 20 est une vue schématique montrant comment est constitué l'espace dans lequel doit se trouver l'image ou les images, ou éventuellement des objets, lors du transfert pour obtenir, lors de la restitution des images réelles.

Les figures 21 à 25 sont des schémas illustrant quelques formes possibles pour la restitution d'hologrammes conformes à l'invention.

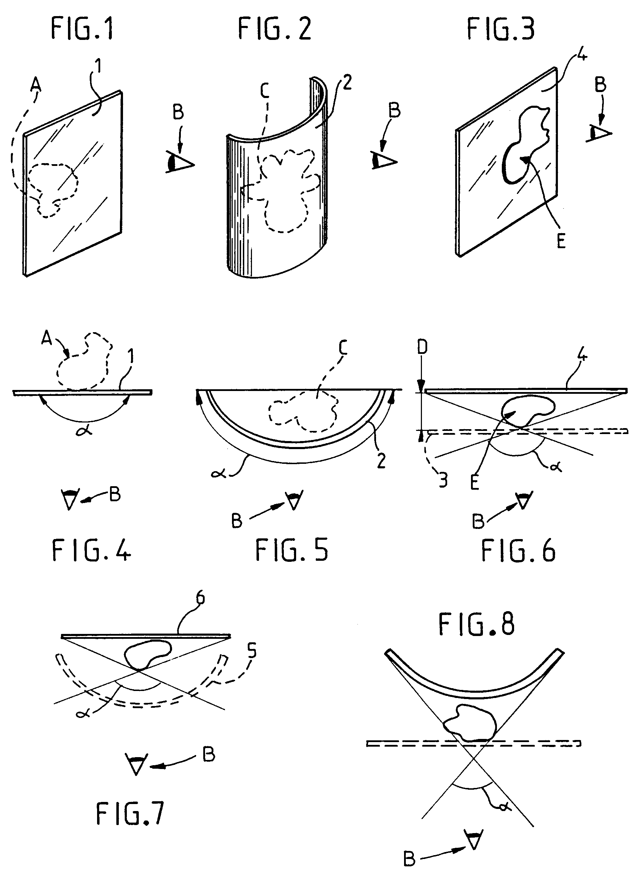

En se reportant aux figures 1 et 6, on voit des schémas conformes à l'état de la technique connue.

Sur les figures 1-4 et 2-5, on voit deux hologrammes qui à la restitution, présentent des images virtuelles, c'est-à-dire apparaissant au-delà de la matière d'enregistrement holographique. Celui des figures 1 et 4, le plus simple, comprend une matière d'enregistrement holographique 1 qui est plane. On ne peut observer l'image virtuelle A que selon un angle de vision α étroit. Pour qu'il soit le moins étroit possible, on fait en sorte que l'image virtuelle A se trouve pratiquement au contact de la matière d enregistrement 1. Ainsi, un observateur B qui se déplacerait par rapport au plan de la matière d'enregistrement 1 verrait encore les quelques points de l'image A en contact avec la matière d'enregistrement 1.

Celui des figures 2 et 5 constitue un progrès par rapport au précédent du fait que la matière d'enregistrement holographique 2 est cintrée. Ainsi, l'observateur B peut, selon un angle de vision α de 180 degrés, voir toute l'image A (selon différents points de vue) au lieu de quelques degrés dans le cas de la figure 1.

Celui des figures 3 et 6 suppose la mise en oeuvre de plusieurs opérations :
Un objet a d'abord été enregistré sur une première matière d'enregistrement holographique plane 3, ce qui a donné naissance à une image. Puis, celle-ci a été à nouveau enregistrée sur une seconde matière d'enregistrement holographique plane 4, à une distance D, pour obtenir une image E qui, à l'observation sous un éclairage ad hoc, est d'une part, réelle puisqu'elle se trouve entre l'observateur B et la matière d'enregistrement holographique 4, et d'autre part orthoscopique puisqu'elle restitue l'impression de relief vrai et non de relief inversé.

Si l'observateur B se déplace transversalement, il peut voir les parties les plus avancées de l'image réelle orthoscopique E selon un champ de vision α qui ne peut pas atteindre 180 degrés,

Il s'agit ici d'un "hologramme de transfert" et l'on voit que la distance D est déterminante pour l'étendue du champ de vision α. Plus la distance D est grande, plus l'image E est en avancée et plus le champ de vision α est étroit. Si l'on voulait qu'il soit plus étendu, il faudrait nécessairement réduire la distance D et donc, diminuer l'avancée de l'image E, peut être même en transformant en virtuelles certaines de ses parties qui auraient été réelles, du fait qu'elles passeraient au-delà de la matière d'enregistrement 4.

Les figures 2 et 5 illustrent la solution proposée par le document JOURNAL OPTICAL SOC. AM. analysé plus haut : l'observateur B se trouve du côté convexe d'une matière d'enregistrement holographique courbe 2 et observe à travers cette surface 2 une image virtuelle C.

Sur les figures 3 et 6, on a représenté la solution proposée par le document "APPLIED PHYSICS LETTERS" analysé plus haut.

Les figures 7 et 8 sont des schémas théoriques qui montrent ce que pourrait être une combinaison des solutions des figures 2-5 et 3-6.

Sur la figure 7, le primaire 5 est courbe et le secondaire 6 est plan. On obtient une image de type E mais on observe celle-ci par sa partie qui correspond à celle de l'objet la plus proche de la concavité du primaire 5. Le champ de vision est donc tout aussi limité que dans le cas des figures 3-6 car le document correspondant n'apporte aucun enseignement permettant d'étendre le champ de vision .

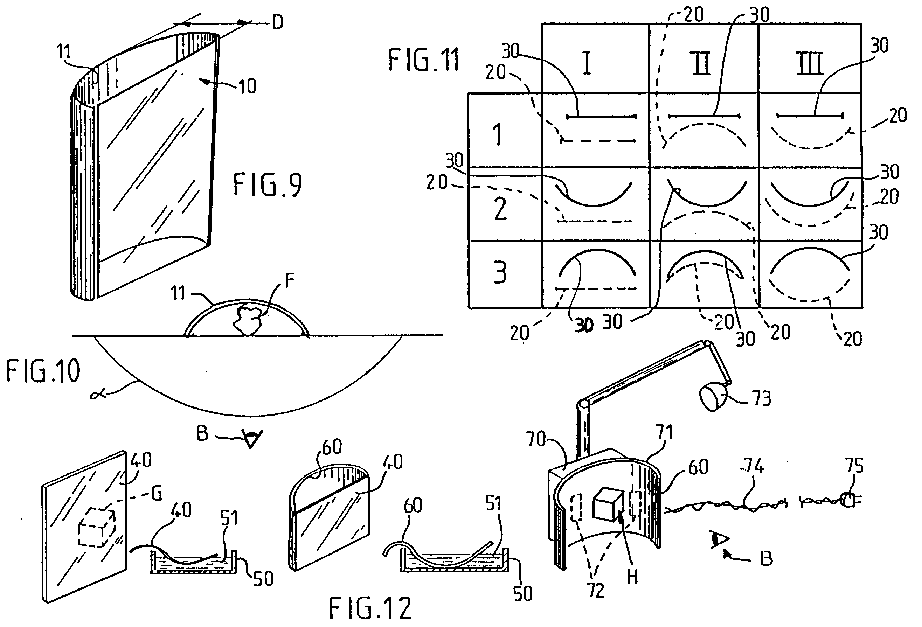

L'invention s'écarte tout-à-fait des solutions antérieures comme le montre le schéma des figures 9 et 10.

Selon l'invention on réalise un primaire sur une matière d'enregistrement holographique plane 10, puis on transfère l'image obtenue, sur une matière d'enregistrement holographique 11 (secondaire) qui présente une concavité dirigée, lors du transfert, vers le primaire.

Le schéma de la figure 10 représente la situation du secondaire 11 lors de la restitution.

On voit tout d'abord que l'on est en présence d'une image F qui est réelle et orthoscopique. Elle se trouve dans l'espace déterminé par les bords de la concavité du secondaire 11, selon la distance D. En revanche, si le primaire 10 n'est pas très proche, c'est-à-dire s'il n'est pas pratiquement au contact des bords latéraux du secondaire 11, on crée des angles morts dont on explicitera plus loin l'intérêt que, néanmoins ils peuvent présenter.

La figure 11 est un tableau sur lequel on a rassemblé tous les schémas de transfert possibles entre hologrammes plans, convexes et concaves.

La colonne I groupe les schémas selon lesquels le primaire est plan. La colonne II groupe les schémas selon lesquels le primaire est concave et la colonne III groupe les schémas selon lesquels le primaire 20 est convexe.

La ligne 1 groupe les schémas selon lesquels le secondaire 30 est plan. La ligne 2 groupe les schémas selon lesquels le secondaire 30 est convexe et la ligne 3 groupe les schémas selon lesquels le secondaire 30 est concave.

Parmi les documents antérieurs cités plus haut, seul celui des figures 3-6 prévoit un hologramme de transfert. Il correspond à la case I-1. Les combinaisons théoriques représentées sur les figures 7 et 8 correspondent aux cases III-1 et I-2.

Les solutions peuvent être résumées ainsi :
- Case I-1 : pas de courbure du primaire, pas de champ de vision étendu.
- Case II-1 : pas de champ de vision étendu.
- Case III-1 : pas de champ de vision étendu.
- Case I-2 : pas de champ de vision étendu.
- Case II-2 : pas de champ de vision étendu.
- Case III-2 : champ de vision encore plus étroit qu'avec le schéma de la case III-1.
- Case I-3 : solution de l'invention. Le champ de vision peut être de 180 degrés sur une partie de l'image très proche du primaire, lorsque le primaire et le secondaire ont leurs bords jointifs lors du transfert.
- Case II-3 : solution de l'invention. Ce schéma permet d'utiliser, pour l'enregistrement, un laser ayant une faible longueur de cohérence et, donc, bon marché. En revanche, la distance D est relativement faible et tend vers le rétrécissement du champ de vision.
- Case III-3 : solution de l'invention. Le champ de vision peut être de 180 degrés lorsque l'image est située dans un plan passant par les bords du primaire et les bords du secondaire. Le primaire et le secondaire peuvent avoir leurs bords jointifs lors du transfert.

La figure 12 illustre schématiquement le procédé conforme à l'invention.

Un objet G est d'abord enregistré sur une première matière d'enregistrement holographique 40 (primaire) qui, ici, est représentée sous forme plane.

Cette surface 40 est soumise aux opérations de développement connues en soi, comme cela est symbolisé par un bac 50 contenant un liquide 51.

Après développement, on procède à l'enregistrement de son image holographique sur une seconde matière d'enregistrement holographique 60 qui est maintenue dans une conformation où elle présente, vers le primaire 40, une partie concave.

Elle est soumise aux opérations de développement connues en soi, comme cela est symbolisé par un bac 50 contenant un liquide 51.

En vue de la restitution de l'image holographique de l'objet G, la surface 60 est associée à un support 70 suffisamment rigide et solide pour maintenir cette surface 60 dans la même conformation que celle qu'elle avait lors du second enregistrement (enregistrement du secondaire).

On peut, pour cela, utiliser un cadre, des profilés ou toute autre structure 71 comprenant avantageusement des moyens de fixation par exemple amovible tels que des parties métalliques 72 devant être situées en regard d'aimants permanents (non visibles sur le dessin) solidaires du support 70.

Le support 70 est avantageusement associé à un appareil d'éclairage 73, orientable afin de pouvoir, en tous lieux, donner aux rayons lumineux qui en sont issus une direction coordonnée à celle de l'éclairage choisi lors de l'enregistrement du secondaire.

Un cordon électrique 74 et une fiche 75 permettent le raccordement à une installation électrique banale.

On remarque que la concavité du secondaire 60 est orientée vers le primaire 40 lors de l'enregistrement et vers l'observateur B lors de la restitution.

Cette forme tridimentionnelle concave de la matière d'enregistrement holographique du secondaire 60 permet, par comparaison à un hologramme de transfert plan classique, d'augmenter le champ de vision de son image réelle orthoscopique, sans qu'il soit nécessaire d'augmenter son format, ni de diminuer par endroits l'éloignement de image par rapport à ladite matière d'enregistrement holographique.

Ainsi, le champ de vision peut être augmenté sur un plan horizontal, vertical ou oblique.

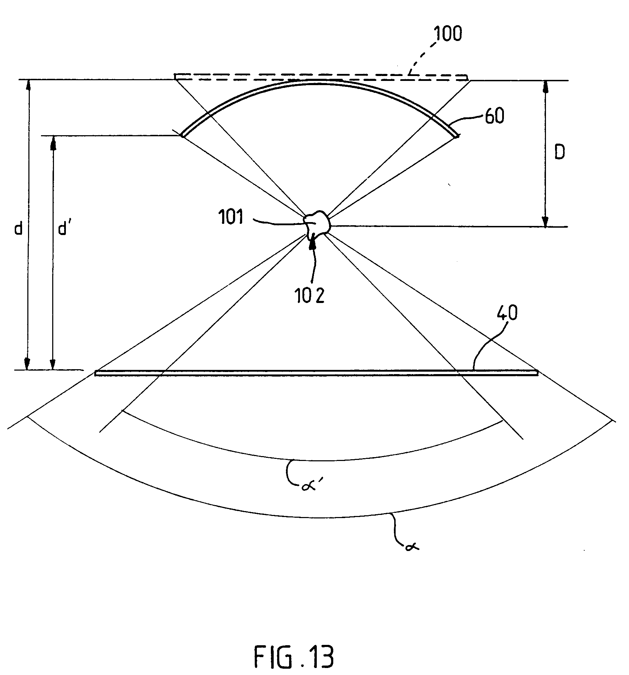

En se reportant à la figure 13, on voit que l'on peut constater, par superposition qu'un hologramme de transfert plan 100, se trouvant à la même distance D d'un point 101, de l'image transférée 102 ne permettrait d'obtenir qu'un champ de vision α' inférieur au champ de vision α obtenu conformément à l'invention avec un secondaire concave 60.

Avec cette forme en arc de cercle, la distance entre chaque point de l'image et l'hologramme 60 est constante puisque l'image se trouve pratiquement au centre de l'arc de cercle. En revanche, la distance mesurée perpendiculairement à partir de l'hologramme de transfert 40 est variable entre les valeurs d et d'.

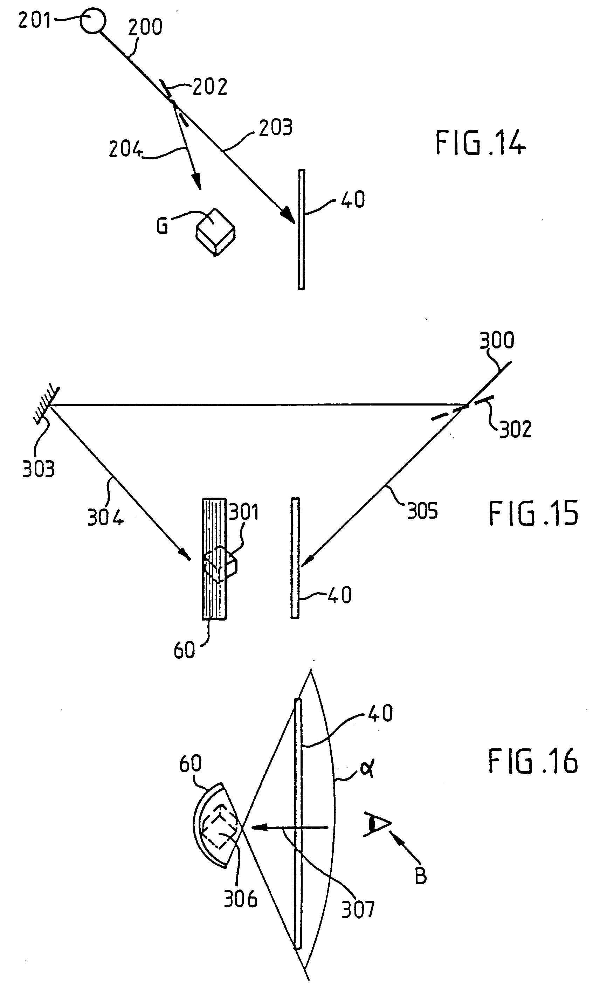

La figure 14 représente schématiquement en plan, le procédé d' enregistrement sur un premier hologramme plan 40 de l'image d'un objet G, à l'aide d'un faisceau 200 provenant d'une source cohérente 201. Un miroir semi-transparent 202 sépare le faisceau 200 en deux, pour obtenir un "faisceau de référence" 203 et un "faisceau objet" 204.

Avec cette configuration connue, on dit que l'hologramme 40 est restituable par transmission.

La figure 15 représente schématiquement en élévation la technique de transfert conforme à l'invention, du primaire plan 40 sur le secondaire concave 60.

Un faisceau 300 provenant d'une source cohérente et séparé en deux par un miroir semi-transparent 302 pour obtenir un "faisceau objet 305" et, par reflexion sur le miroir 303, "un faisceau de référence" 304.

Le faisceau 305 restitue le primaire 40 qui donne une image réelle pseudoscopique 301 de l'objet G.

La figure 16 représente schématiquement en plan un observateur B regardant l'image réelle orthoscopique 306 de l'objet G du secondaire concave 60, comme s'il voyait à travers le primaire plan 40. Le secondaire 60 est restitué grâce à un faisceau de restitution 307 qui peut avoir une composition spectrale et une cohérence variable. Pour mieux constater, dans ce cas, une augmentation du champ de vision sur l'image réelle orthoscopique, il faut que le primaire 40 soit suffisamment grand pour obturer le moins possible le champ de vision α sur l'image 306.

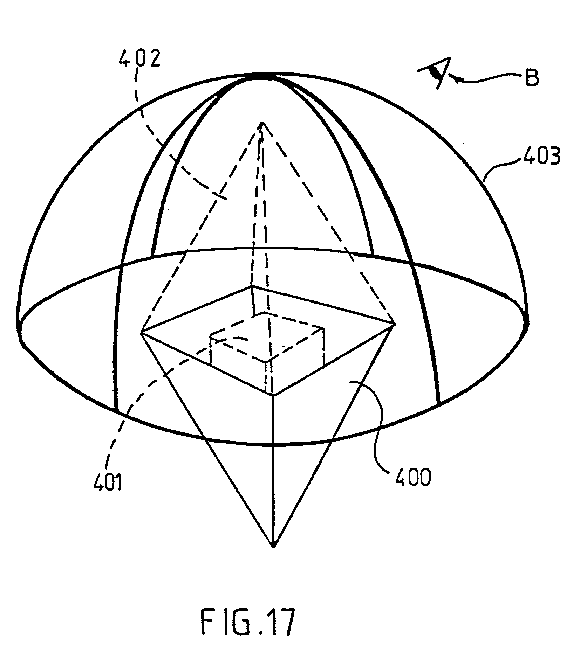

La figure 17 représente schématiquemnt en perspective des possibilités de l'invention.

Un hologramme concave 400, ici de forme pyramidale mais qui pourrait aussi être conique, restitue une image réelle erthoscopique 401 convenablement positionnée. Cette image 401 provient d'un hologramme transféré 402 de forme correspondante à celle de l'hologramme 400.

Dans ce cas, l'image réelle orthoscopique 401 peut être observée à partir d'une aire de vision de forme hémisphérique 403.

Si les dimensions des hologrammes 400 et 402 sont suffisantes, on peut prévoir que l'observateur puisse y pénétrer pour visualiser l'image 401.

L'hologramme final peut être enregistré de telle manière qu'il puisse être restitué par transmission et/ou par réflexion.

L'hologramme a transférer peut être restitué par réflexion. Il peut avoir une surface plane ou de forme tridimensionnelle symétrique ou irrégulière selon les cas. Il peut être remplacé par un hologramme multiplexé par bandes, par un hologramme réalisé par la technique de l'estampage.

L'hologramme final peut enregistrer simultanément ou séparément plusieurs hologrammes qui peuvent être additionnés à des objets matériels. Il peut avoir plusieurs angles de restitution et être superposé à d'autres hologrammes en utilisant leur propriété de transparence.

Cet hologramme final peut être le résultat de plusieurs transferts d'hologrammes.

Ces hologrammes peuvent être réalisés sur toutes les matières d'enregistrement holographique pouvant avoir de telles formes tridimentionnelles et qui sont sensibles aux longueurs d'ondes utilisables, comme par exemple les films holographiques souples aux halogénures d'argent.

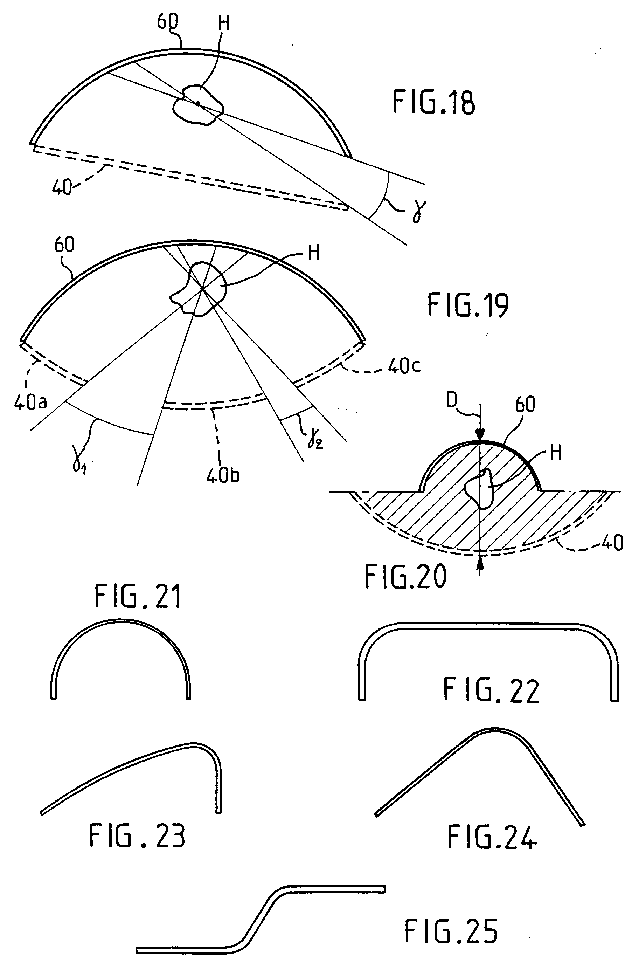

Ainsi, la figure 18 montre, lors du transfert, le primaire 40 plan et le secondaire concave 60 n'ayant qu'un seul bord jointif.

Par rapport au centre de l'image H, un observateur ne perçoit pas le point de vue de cette image H quand il se trouve dans l'angle mort γ.

Cette disposition permet de créer des effets spéciaux d'apparition et de disparition d'image lorsque l'observateur se déplace.

Comme indiqué précédemment et comme cela apparaît dans les cases I-3, II-3 et III-3 du tableau de la figure 11, le primaire 40 de l'invention peut être plan, concave ou convexe.

Sur la figure 19, on a représenté le cas où l'on utilise trois primaires 40a, 40b et 40c. Il peut s'agir d'un même hologramme fragmenté concourant à créer la même image H, ou bien trois hologrammes distincts procurant trois images différentes.

Chacun d'eux est plan, concave ou convexe. Ils sont, ici, séparés par deux espaces créant deux angles morts γ1 et γ2 qui font disparaître les points de vue de l'image H correspondants pour un observateur qui se trouve dans ces angles.

Cela permet de créer des effets spéciaux d'apparition et de disparition d'une ou de plusieurs images distinctes, différentes, complémentaires, groupées etc.

L'important, ici, étant de créer des angles morts, on peut aussi bien procéder par découpe d'un hologramme que par placage de masques opaques.

Les hologrammes 40a, 40b et 40c peuvent être plans, concaves ou convexes et peuvent être disposés selon une ligne droite, courbe ou brisée.

Les hologrammes 40a et 40c ont, ici, chacun un bord adjacent à un bord du secondaire concave 60 pour supprimer tout angle mort latéral.

On a donc l'avantage d'un angle de vision réparti sur 180 degrés et la possibilités de créer des effets spéciaux.

Sur la figure 20, on a représenté un espace hachuré qui existe entre le primaire 40 et le secondaire concave 60, où peut se trouver l'image réelle H lors de la restitution.

Les figures 21 à 25 illustrent différentes formes que l'on peut donner aux matières d' enregistrement holographique, selon certains effets d'optique que l'on veut obtenir.

En associant des parties concaves et des parties planes et/ou convexes, on peut situer des hologrammes dans un véritable décor susceptible de renforcer encore leur effet attractif.

L'hologramme de transfert peut être copié par la technique de l'estampage ou par la technique holographique en lumière cohérente.

Il peut avoir, lors de l'enregistrement et à la restitution, une surface de forme tridimenstionnelle symétrique ou irrégulière présentant au moins un renforcement d'une profondeur variable à un ou plusieurs angles rentrants.

Lors du transfert, la concavité formée par la courbure de l'hologramme de transfert est orientée vers une partie ou vers l'ensemble de l'image réelle pseudoscopique de l'hologramme à transférer. Ainsi, la distance entre les différents hologrammes est variable. Lorsque ces hologrammes sont par endroits très proches ou même en contact, il est possible d'utiliser un seul faisceau de lumière cohérente, par exemple en ondes planes, pour restituer et enregistrer ces différents hologrammes lors du transfert.

Lorsque les concavités sont très accentuées, il faut utiliser des optiques spéciales comme par exemple des optiques coniques et/ou des éléments optiques holographiques spéciaux, pour pouvoir les enregistrer et les restituer convenablement.

Il n'est pas obligatoire que les différents hologrammes aient avec exactitude, lors de la restitution, les mêmes formes de matière d'enregistrement holographique que celles qu'ils avaient lors de l'enregistrement.

Les sujets holographiés peuvent être des chiffres ou des lettres, des pièces de machines et de mécanismes, des dessins, des photos, des oeuvres d'art, ou leurs copies, ou tout autre objet matériel de la nature ou de l'activité humaine.

L'invention peut être utilisée notamment dans la séparation spatiale des images, pour les systèmes de stockage d'information, pour la réalisation et la reproduction de copies d'oeuvres d'art, pour la construction de panoramas artistiques, pour l'enregistrement de portraits holographiques, pour la production de matériel didactique, de stands et de souvenirs ainsi que dans la publicité et la communication.

Pour obtenir un angle de vision de 180 degrés, il fout qu'au moment du transfert, l'image holographique se trouve dans l'espace qui existe entre le primaire 40 et le secondaire concave 60.

Lorsque le primaire 40 est plan et a ses bords jointifs avec ceux de la concavité du secondaire 60, l'espace est déterminé par la concavité et le primaire (cette configuration est visible sur la figure 9).

Mais d'autres configurations sont possibles et sur la figure 20 on a représenté celle selon laquelle le primaire 40 est convexe. L'espace dans lequel l'image, ou les images, doivent se trouver est indiqué par des hachures et l'on voit que cet espace est délimité par les matières d'enregistrement holographiques elles-mêmes et par les plans imaginaires P qui joignent les bords du primaire et du secondaire, lorsqu'ils ne sont pas en contact, contrairement au cas de la figure 9.

Les figures 21 à 25 illustrent différentes formes que l'on peut donner au secondaire en fonction de certains effets d'optique que l'on veut obtenir.

En associant des parties concaves et des parties planes et/ou convexes, on peut situer des hologrammes dans de véritables décors susceptibles de renforcer encore leur effet attractif.

On peut, notamment, lors du transfert du primaire au secondaire, placer entre eux des objets réels dont l'image sera enregistrée en même temps que l'image du primaire.

## Revendications

1. Procédé d'obtention d'une image holographique au moins en partie réelle et orthoscopique réalisation d'un hologramme dans laquelle :
a1) - on enregistre holographiquement l'image d'un objet sur une première matière d'enregistrement holographique conformée selon une première surface,
a2) - on effectue un développement photographique de cette première matière d'enregistrement holographique,
a3) - on dispose en regard de la première matière d'enregistrement holographique développée et conformée selon ladite première surface, une deuxième matière d'enregistrement holographique conformée selon une deuxième surface non parallèle à la première surface et présentant au moins une partie concave tournant sa concavité vers la première matière d'enregistrement holographique,
a4) - on restitue l'image réelle pseudoscopique de l'objet enregistrée sur la première matière d'enregistrement holographique, au moins une partie de cette image restituée étant située dans l'espace limité par les deux matières d'enregistrement holographique, et on enregistre holographiquement cette image restituée sur lu deuxième matière d'enregistrement holographique conformée selon ladite deuxième surface, et
a5) - on effectue un développement photographique de la deuxième matière d'enregistrement holographique,
et une étape b) de restitution de l'image holographique au moins en partie réelle et orthoscopique à partir de l'hologramme réalisé, dans laquelle on restitue l'image holographique de l'objet à partir de lu deuxième matière d'enregistrement holographique conformée selon la deuxième surface.

2. Procédé selon la revendication 1, caractérisé par le fait que la première surface de la première matière d'enregistrement holographique est plane.

3. Procédé selon la revendication 1, caractérisé par le fait que la première surface de la première matière d'enregistrement holographique présente une concavité dirigée vers la deuxième matière d'enregistrement holographique dans les sous-étapes a3) et a4).

4. Procédé selon la revendication 1, caractérisé par le fait que la première surface de la première matière d'enregistrement holographique présente une convexité dirigée vers la deuxième matière d'enregistrement holographique dans les sous-étapes a3) et a4).

5. Procédé selon l'une des revendications précédentes, caractérisé par le fait que dans l'étape a) de réalisation de l'hologramme, la deuxième matière d'enregistrement holographique comporte au moins un bord libre situé au voisinage d'un bord libre de la première matière d'enregistrement holographique.

6. Procédé selon l'une des revendications précédentes, caractérisé par le fait que la deuxième matière d'enregistrement holographique est plane à l'état naturel et est conformée pour présenter une deuxième surface ayant au moins une partie courbe.

7. Procédé selon la revendication 6, caractérisé par le fait que la deuxième matière d'enregistrement holographique est conformée selon une forme entièrement concave et courbe.

## Claims

1. Method for obtaining an at least partially real and orthoscopic holographic image of an object, including a step a) of construction of a hologram, in which step:
a1) - holographic recording takes place of the image of an object on a first holographic recording material conformed according to a first surface,
a2) - a photographic development of this first holographic recording material is carried out,
a3) - a second holographic recording material conformed according to a second surface which is not parallel to the first surface and exhibits at least one concave part is arranged to face the first holographic recording material which is developed and conformed according to the said first surface, turning the concavity of the said second surface towards the first holographic recording material,
a4) - reconstruction takes place of that psuedoscopic real image of the object which is recorded on the first holographic recording material, at least a part of this reconstructed image being situated in the space bounded by the two holographic recording materials, and holographic recording takes place of this reconstructed image on the second holographic recording material conformed according to the said second surface, and
a5) - a photographic development of the second holographic recording material is carried out,
and a step b) of reconstruction of the at least partially real and orthoscopic holographic image from the hologram constructed, in which step reconstruction takes place of the holographic image of the object from the second holographic recording material conformed according to the second surface.

2. Method according to Claim 1, characterised in that the first surface of the first holographic recording material is plane.

3. Method according to Claim 1, characterised in that the first surface of the first holographic recording material exhibits a concavity directed towards the second holographic recording material in the substeps a3) and a4).

4. Method according to Claim 1, characterised in that the first surface of the first holographic recording material exhibits a convexity directed towards the second holographic recording material in the substeps a3) and a4).

5. Method according to one of the preceding claims, characterised in that in the step a) of construction of the hologram a second holographic recording material includes at least one free edge situated in the vicinity of a free edge of the first holographic recording material.

6. Method according to one of the preceding claims, characterised in that the second holographic recording material is plane in the natural state and is conformed to exhibit a second surface having at least one curved part.

7. Method according to Claim 6, characterised in that the second holographic recording material is conformed according to a shape which is entirely concave and curved.

## Patentansprüche

1. Verfahren zum Erhalten eines wenigstens teilweise reellen und orthoskopischen holographischen Bildes eines Objektes, umfassend einen Schritt a) der Ausführung eines Hologramms, bei dem:
a1) - das Bild eines Objektes holographisch auf einem ersten holographischen Aufzeichnungsmaterial gebildet gemäß einer ersten Fläche aufgezeichnet wird,
a2) - eine fotografische Entwicklung dieses ersten holographischen Aufzeichnungsmaterials ausgeführt wird,
a3) - gegenüber dem entwickelten und gemäß der ersten Fläche gebildeten ersten holographischen Aufzeichnungsmaterial ein zweites holographisches Aufzeichnungsmaterial angeordnet wird, das gemäß einer zur ersten Fläche nicht parallelen zweiten Fläche gebildet ist und wenigstens einen konkaven Teil aufweist, der seine Hohlfläche zum ersten holographischen Aufzeichnungsmaterial hin richtet,
a4) - das reelle pseudoskopische Bild des auf dem ersten holographischen Aufzeichnungsmaterial aufgezeichneten Objektes rekonstruiert wird, wobei wenigstens ein Teil des rekonstruierten Bildes in dem durch die beiden holographischen Aufzeichnungsmaterialien begrenzten Raum liegt, und das rekonstruierte Bild auf dem zweiten holographischen Aufzeichnungsmaterial gebildet gemäß der zweiten Fläche holographisch aufgezeichnet wird, und
a5) - eine fotografische Entwicklung des zweiten holographischen Aufzeichnungsmaterials ausgeführt wird,
und einen Schritt b) zur Rekonstruktion des wenigstens teilweise reellen und orthoskopischen holographischen Bildes ausgehend von dem ausgeführten Hologramm, bei dem das holographische Bild des Objektes ausgehend von dem zweiten holographischen Aufzeichnungsmaterial gebildet gemäß der zweiten Fläche rekonstruiert wird.

2. Verfahren nach Anspruch 1, dadurch **gekennzeichnet,** daß die erste Fläche des ersten holographischen Aufzeichnungsmaterials eben ist.

3. Verfahren nach Anspruch 1, dadurch **gekennzeichnet,** daß die erste Fläche des ersten holographischen Aufzeichnungsmaterials eine Hohlfläche aufweist, die zum zweiten holographischen Aufzeichnungsmaterial in den Teilschritten a3) und a4) gerichtet ist.

4. Verfahren nach Anspruch 1, dadurch **gekennzeichnet,** daß die erste Fläche des ersten holographischen Aufzeichnungsmaterials eine konvexe Form aufweist, die zum zweiten holographischen Aufzeichnungsmaterial in den Teilschritten a3) und a4) gerichtet ist.

5. Verfahren nach einem der vorhergehenden Ansprüche, dadurch **gekennzeichnet,** daß im Schritt a) zur Ausführung des Hologramms das zweite holographische Aufzeichnungsmaterial wenigstens einen in der Nähe eines freien Rands des ersten holographischen Aufzeichnungsmaterials liegenden freien Rand umfaßt.

6. Verfahren nach einem der vorhergehenden Ansprüche, dadurch **gekennzeichnet,** daß das zweite holographische Aufzeichnungsmaterial im Naturzustand eben ist und gebildet ist, um eine zweite Fläche aufzuweisen, die wenigstens einen gekrümmten Teil besitzt.

7. Verfahren nach Anspruch 6, dadurch **gekennzeichnet,** daß das zweite holographische Aufzeichnungsmaterial gemäß einer völlig konkaven und gekrümmten Form gebildet ist.
